# EUROPÄISCHE PATENTSCHRIFT

(11) **EP 3 135 948 B1**
(45) Veröffentlichungstag und Bekanntmachung des Hinweises auf die Patenterteilung: **24.10.2018**
(21) Anmeldenummer: 16001583.0
(22) Anmeldetag: 15.07.2016
(51) Int. Cl.: F16D 66/02

(54) **VORRICHTUNG ZUR BEFESTIGUNG EINES VERSCHLEISSSENSORS AN EINEM BREMSHEBEL EINER FAHRZEUGBREMSE**
DEVICE FOR FIXING A WEAR SENSOR TO A BRAKE LEVER OF A VEHICLE BRAKE
DISPOSITIF DE FIXATION D'UN CAPTEUR D'USURE SUR UN LEVIER DE FREIN D'UN FREIN DE VEHICULE AUTOMOBILE

(30) Priorität: 06.08.2015 DE 102015010348
(43) Veröffentlichungstag der Anmeldung: 01.03.2017
(73) Patentinhaber: MAN Truck & Bus AG, 80995 München (DE)
(72) Erfinder: Füchsle, Ludwig, 85305 Jetzendorf (DE); Butz, Matthias, 80637 München (DE); Wittmann, Thomas, 86368 Gersthofen (DE)
(74) Vertreter: v. Bezold & Partner Patentanwälte - PartG mbB

(56) Entgegenhaltungen:
- WO-A1-2008/058508
- WO-A2-2012/130253
- DE-A1- 4 418 026

## Beschreibung

Die Erfindung betrifft eine Vorrichtung zur Befestigung eines Verschleißsensors an einem Bremshebel einer Fahrzeugbremse, insbesondere an einem Bremshebel mit integrierter Nachstellfunktion für die Fahrzeugbremse.

Bei schweren Nutzfahrzeugen kommen in verschiedensten Einsatzgebieten und Fahrzeugtypen verschleißbehaftete Trommelbremsen zum Einsatz. Nach dem Stand der Technik werden Trommelbremsen bei schweren Nutzfahrzeugen z. B. als S-Nockenbremsen in Simplex-Bauart gebaut. Dabei betätigt ein pneumatischer Zylinder über einen Bremshebel mit integrierter Nachstellfunktion eine Welle mit einer S-Nocke. Diese S-Nocke drückt infolgedessen die einseitig drehbar gelagerten Bremsbacken gegen die Bremstrommel und erzeugt so die erwünschte Bremswirkung. Derartige Bremshebel werden auch Gestängesteller genannt. Beide Begriffe sind im Rahmen der vorliegenden Erfindung als gleichbedeutend anzusehen.

Mit zunehmendem Verschleiß stellt der Bremshebel dabei die Ausgangsposition der Bremsnockenwelle nach, so dass zu Beginn jedes Bremsvorgangs dasselbe Spiel zwischen Bremsbacken und Bremstrommel besteht. Derartige Bremshebel sind beispielsweise in der DE 40 17 950 A1 oder DE 20 2011 106 746 U1 offenbart.

Um dabei kontinuierlich den Verschleißzustand der Bremsbeläge ermitteln zu können, kommen Sensoren zum Einsatz, welche die bereits erfolgte Nachstellung erfassen. Aus dem Maß der bereits erfolgten Nachstellung lässt sich dann direkt der Verschleißzustand der Bremsbeläge ableiten. Nachfolgend wird daher für einen derartigen Sensor auch der Begriff "Verschleißsensor" oder auch nur "Sensor" verwendet.

Wie aus der US 5,207,299 A1 beispielweise bekannt ist, können diese Sensoren dabei im Bremshebel bzw. Gestängesteller integriert sein und aus den Positionen der integrierten Komponenten die bereits erfolgte Nachstellung ermitteln. Integrierte Sensoren haben jedoch den Nachteil, dass bei einem elektrischen Defekt des Sensors eventuell der gesamte Gestängesteller getauscht werden muss. Zudem können derartige Sensoren auch nicht beliebig bei Fahrzeugen nachgerüstet werden, da auch hier wiederum dann ebenfalls der gesamte Gestängesteller erneuert werden müsste. Dies verursacht hohe Kosten.

Des Weiteren ist aus der Patentschrift EP 830 521 B1 eine Vorrichtung zum Anzeigen eines Bremsbelagverschleißes bekannt, die nachträglich am Gestängesteller angebracht werden kann und die eine relative Änderung der Nockenwellenposition zum Gestängesteller ermittelt. Dazu greift ein verzahntes Blech in die Verzahnung der Nockenwelle ein und wird über einen Sicherungsring axial gesichert. Ein darum drehbar gelagertes Gehäuse beinhaltet dabei die Sensorik und wird nur mittels eines Stifts am Gestängestellergehäuse gegen Verdrehung gesichert. Bei jeder Nachstellung dreht sich das verzahnte Blech um einen bestimmten Winkel gegenüber dem festen Gehäuse. Dieser Winkel wird erfasst und in ein Verschleißvolumen umgerechnet.

Die aus dem Stand der Technik bekannten nachträglich montierbaren Sensoren haben den Nachteil, dass sie meist nur auf eine Art, d. h. an einer bestimmten Stelle in einer bestimmten Ausrichtung, am Gestängesteller montiert werden können, entsprechend der vorgesehenen Befestigungsstelle am Gestängesteller. Auf Grund dieser Einschränkung kann es daher dazu kommen, dass die Sensoren aus bauraumtechnischen Gründen nicht verwendet werden können. Auf Grund der besonderen Einbausituation von Fall zu Fall und den oft geringen Stückzahlen kann es aber auch nicht sinnvoll sein, eine jeweils angepasste Version des Sensorgehäuses zu erstellen, da dies zu erhöhten Kosten in der Entwicklung führt. Eine Verschleißsensierung ist dann nicht für jede Anwendung möglich.

Aus der Offenlegungsschrift DE 10 2004 046 230 A1 ist ferner eine Vorrichtung zur Erfassung mindestens eines Verschleißzustandes einer durch Drehung einer Bremswelle mit automatischem Gestängesteller betätigbaren Fahrzeugbremse bekannt, umfassend einen auf der Bremswelle drehfest angeordneten Ring sowie ein den Ring umgebendes, drehfest mit dem Gestängesteller verbundenes Gehäuse. Um diesen nachträglich montierbaren Verschleißsensor in mehr als nur einer Position auf der Bremswelle befestigen zu können, wird vorgeschlagen, dass der Ring aus einem inneren, mit der Bremswelle im Eingriff stehenden Adapterring und einem Außenring zusammengesetzt ist, wobei Außenring und Adapterring drehfest zueinander sind. Auf diese Weise kann die Vorrichtung durch Austausch des inneren Adapterrings in verschiedenen Positionen auf der Bremswelle befestigt werden. Unterschiede des Bremswellendurchmessers oder deren Gestalt werden durch Austausch des Adapterrings ausgeglichen, so dass die Vorrichtung in verschieden Axialpositionen auf der Bremswelle montierbar ist. Wenn der Verschleißsensor jedoch an einer bestimmten Axialposition montiert werden soll, kann es auch bei diesem Verschleißsensor dazu kommen, dass der Sensor aus bauraumtechnischen Gründen nicht verwendet werden kann. Ferner ist der in der DE 10 2004 046 230 A1 vorgeschlagene Ansatz dann nicht anwendbar, wenn es aus entwicklungs- oder kostentechnischen Gründen (geringe Stückzahlen etc.) erforderlich ist, den bisher verwendeten Sensortyp in einer geänderten Einbausituation weiterzuverwenden.

Es ist somit eine Aufgabe der Erfindung, einen verbesserten Ansatz bereitzustellen, mit dem Nachteile herkömmlicher Techniken vermieden werden können, um einen Verschleißsensor an einem Bremshebel mit integrierter Nachstellfunktion einer Fahrzeugbremse zu befestigen. Die Aufgabe der Erfindung ist es insbesondere, die Möglichkeit bereitzustellen, einen nachträglich montierbaren Verschleißsensor an einem Bremshebel (Gestängesteller) einer Fahrzeugbremse, insbesondere einer Trommelbremse, auch bei unterschiedlichen Einbausituationen bzw. Bauraumsituationen anzubringen. Der Erfindung liegt insbesondere die Aufgabe einer einfachen und kostensparenden Gestaltung einer solchen Möglichkeit zugrunde.

Diese Aufgaben werden durch eine Vorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die Erfindung umfasst die allgemeine technische Lehre, eine Vorrichtung zur Befestigung des Verschleißsensors an dem Bremshebel bereitzustellen, mittels derer eine Adaptierung an unterschiedliche Einbausituationen ermöglicht wird, so dass auf eine Anpassung des Sensors bzw. des Sensorgehäuses oder des Hebelarms bzw. Hebelarmgehäuses verzichtet werden kann. Eine derartige Vorrichtung wird nachfolgend auch kurz als Adaptervorrichtung, Vorrichtung oder Sensorhalterung bezeichnet.

Gemäß einem ersten Gesichtspunkt der Erfindung wird somit eine Vorrichtung zur Befestigung eines Verschleißsensors an einem Bremshebel mit integrierter Nachstellfunktion einer Fahrzeugbremse bereitgestellt. Die Vorrichtung weist eine Aussparung zur berührungslosen Durchführung einer Bremswelle auf, die eine dem Querschnitt der Bremswelle entsprechende Kontur aufweist. Die Vorrichtung weist ferner eine erste Befestigungsstelle zur Befestigung einer ersten Seite der Vorrichtung an einem Gehäuseabschnitt des Bremshebels sowie mindestens eine zweite Befestigungsstelle zur Befestigung eines Verschleißsensors an einer zweiten, zur ersten Seite gegenüberliegenden Seite der Vorrichtung auf. Hierbei ist die zweite Befestigungsstelle beabstandet zur ersten Befestigungsstelle angeordnet.

Die Adaptervorrichtung dient somit als Zwischenelement, das zwischen dem Bremshebel und dem Verschleißsensor anbringbar ist. Falls der Verschleißsensor aus bauraumtechnischen Gründen nicht an der dafür vorgesehenen Montagestelle am Bremshebelgehäuse anbringbar ist, kann stattdessen die Adaptervorrichtung an dieser Stelle befestigt werden, wobei der Verschleißsensor dann an der beabstandeten zweiten Befestigungsstelle angebracht wird. Die Lage der zweiten Befestigungsstelle kann so gewählt oder vorgesehen sein, dass der Verschleißsensor in dem verfügbaren Bauraum montiert werden kann. Auf diese Weise kann auf eine Anpassung des Sensors bzw. des Sensorgehäuses oder des Hebelarms bzw. Hebelarmgehäuses verzichtet werden.

Vorstehend wurde bereits erwähnt, dass die Begriffe Bremshebel und Gestängesteller in diesem Dokument gleichbedeutend verwendet werden. Gleiches gilt für die Begriffe Bremshebelgehäuse und Gestängestellergehäuse. Eine hervorgehobene Anwendung der Erfindung betrifft die Ausgestaltung der Fahrzeugbremse als Trommelbremse, und die Ausgestaltung der Bremswelle als Bremsnockenwelle, weiter vorzugsweise als S-Nocken-Keilwelle.

Um wenig zusätzlichen Bauraum zu beanspruchen, kann die Vorrichtung als Flachbauteil ausgeführt sein. Beispielsweise kann die Vorrichtung aus einem metallischen Werkstoff, insbesondere als flaches Blechteil, ausgeführt sein. Ferner können die die Aussparung umgebenden Abschnitte der Vorrichtung zwei plane Anlageflächen auf gegenüberliegenden Seiten der Vorrichtung ausbilden, um so eine sichere Anlage an das Gehäuse des Bremshebels und an das Gehäuse des Verschleißsensors zu ermöglichen.

Zur Realisierung eines einfachen Befestigungsmechanismus kann die erste Befestigungsstelle und/oder die zweite Befestigungsstelle jeweils ein Durchgangsloch aufweisen. Die Befestigung der Adaptervorrichtung an dem Bremshebelgehäuse oder am Gehäuse des Verschleißsensors kann dann mittels eines in das Durchgangsloch eingreifenden Bolzens erfolgen, der z. B. als Schraube oder eingepresster oder eingeschweißter Stift ausgeführt sein kann. Um mehrere alternative Montagepositionen zu ermöglichen, können auch zwei oder mehr Durchgangslöcher zur Ausbildung von zweiten Befestigungsstellen unterschiedlicher Lage vorgesehen sein.

Gemäß einer besonders bevorzugten Ausführungsform kann die Vorrichtung und/oder zumindest der die Aussparung begrenzende Teil bzw. Abschnitt der Vorrichtung hakenförmig, sichelförmig oder teilringförmig sein. Gemäß dieser Ausführungsform wird die Aussparung somit nicht vollumfänglich von der Vorrichtung begrenzt. Diese Ausführungsform ist besonders vorteilhaft, wenn die Vorrichtung so am Bremshebel angebracht wird, dass sie nicht im axialen Kraftfluss zwischen Bremshebel und Verschleißsensor steht, sondern in einem Kraftnebenfluss, der lediglich den Verschleißsensor in seinem Drehfreiheitsgrad einschränkt. Dies ist nachfolgend noch näher erläutert.

Gemäß einer alternativen besonders bevorzugten Ausführungsform ist die Aussparung als kreisförmige Lochung der Vorrichtung ausgeführt. Diese Ausführungsform ist besonders vorteilhaft, wenn die Vorrichtung so am Bremshebel angebracht wird, dass sie im axialen Kraftfluss zwischen Bremshebel und Verschleißsensor steht, was nachfolgend ebenfalls noch näher erläutert wird.

Um die Vorrichtung gemäß dieser alternativen Ausführungsform an den Anbindungsstellen stabiler auszugestalten, kann mindestens eine der Anbindungsstellen eine Lochverstärkung aufweisen. Eine mögliche Variante sieht hierbei vor, dass die Lochverstärkung in Form einer Faltung zur Ausbildung einer mindestens doppelwandigen Anbindungsstelle vorgesehen ist. Eine weitere mögliche Variante sieht hierbei vor, dass die Lochverstärkung in Form einer die Lochung umgebenden Lochscheibe vorgesehen ist. Eine weitere mögliche Variante sieht vor, dass die Lochverstärkung in Form einer länglichen, vorzugsweise bügelförmigen Verstärkungsplatte vorgesehen ist, die sich von der ersten bis zur zweiten Anbindungsstelle erstreckt und an ihren beiden Endbereichen jeweils ein Durchgangsloch aufweist, das fluchtend zu dem korrespondierenden Durchgangsloch der Vorrichtung ist.

Gemäß einem zweiten Gesichtspunkt der Erfindung wird eine Anordnung bereitgestellt, die einen Verschleißsensor, einen Bremshebel mit integrierter Nachstellfunktion für eine Trommelbremse sowie eine in diesem Dokument beschriebene Vorrichtung zur Befestigung des Verschleißsensors an dem Bremshebel (Adaptervorrichtung) aufweist.

Die erfindungsgemäße Adaptervorrichtung ist zwischen dem Verschleißsensor und dem Gehäuseabschnitt des Bremshebels angeordnet. Hierbei ist die Adaptervorrichtung über die erste Befestigungsstelle an dem Gehäuseabschnitt des Bremshebels und über die zweite Befestigungsstelle an dem Gehäuse des Verschleißsensors befestigt. Auf diese Weise wird das Gehäuse des Verschleißsensors drehfest zum Gehäuseabschnitt des Bremshebels festlegt. Die Adaptervorrichtung kann an den Anbindungsstellen mittels eines Bolzens, der als Schraube oder eingepresster oder eingeschweißter Stift ausgeführt ist, am Gehäuse des Hebelarms bzw. am Gehäuse des Verschleißsensors befestigt sein.

Hierbei kann der Bremshebel in an sich bekannter Weise in einen oberen Hebelabschnitt zum Verbinden mit dem Bremszylinder und in einen unteren Gehäuseabschnitt zum Anbringen an der Bremsnockenwelle unterteilt sein. Der obere Hebelabschnitt wird üblicherweise mit einem Betätigungselement, z. B. einer Kolbenstange, des Bremszylinders verbunden. Hierbei kann in an sich bekannter Weise in den unteren Gehäuseabschnitt eine Nachstellvorrichtung in der Art eines Getriebes, beispielsweise in Form eines Schneckengetriebes, aufgenommen sein, mit der die Bremswelle gegenüber dem Bremshebel um die Drehachse der Bremswelle bei Verschleiß des Bremsbelags verstellbar ist.

Ferner kann die Nachstellvorrichtung eine an sich bekannte Steueranordnung umfassen, die in Abhängigkeit von der Winkelstellung des Bremshebels von einem festgelegten Referenzpunkt eine Steuerbewegung überträgt, wobei die Steueranordnung einen Steuerarm mit einem Steuerring aufweist, wobei der Steuerarm unter Ausbildung des Referenzpunktes mit einem achsfesten Bauteil, z. B. einem Lagerbock, des Kraftfahrzeugs verbunden ist.

Gemäß einer bevorzugten Ausführungsform der Anordnung ist die Adaptervorrichtung und/oder zumindest der die Aussparung begrenzende Teil der Adaptervorrichtung hakenförmig, sichelförmig oder teilringförmig, wie vorstehend für ein Ausführungsbeispiel der Adaptervorrichtung beschrieben. Hierbei ist die Adaptervorrichtung so zwischen Verschleißsensor und dem Gehäuseabschnitt des Bremshebels angeordnet, dass eine die Aussparung der Adaptervorrichtung begrenzende Kante den Steuerring umgreift und auf diesem aufliegt. Gemäß dieser Ausführungsform der Anordnung steht die Adaptervorrichtung nicht im axialen Kraftfluss zwischen Hebelarm und Verschleißsensor, sondern in einem Kraftnebenfluss, der lediglich den Verschleißsensor in seinem Drehfreiheitsgrad einschränkt. Diese Ausführungsform der Anordnung bietet den besonderen Vorzug, dass die zusätzliche Adaptervorrichtung keinen zusätzlichen axialen Bauraum beansprucht.

Eine vorteilhafte Variante dieser Ausführungsform sieht hierbei vor, dass eine Größe einer Öffnung der Aussparung kleiner als ein Außendurchmesser des Steuerrings ist. Die Größe der Öffnung kann beispielsweise durch einen Abstand der Endbereiche der teilringförmigen Kante bzw. Kontur festgelegt sein, welche die Aussparung begrenzen. Dadurch wird eine Montagehilfe realisiert, da in diesem Fall die während des Montagevorgangs noch um die erste Befestigungsstelle schwenkbare Adaptervorrichtung nicht wieder von dem Steuerring mit dem Steuerarm versehentlich herunter rutschen kann.

Eine weitere vorteilhafte Variante dieser Ausführungsform sieht hierbei vor, dass eine Dicke der Adaptervorrichtung kleiner gleich einem Abstand zwischen den einander zugewandten Gehäuseabschnitten des Verschleißsensors und des Bremshebels im montierten, d. h. im zusammengebauten, Zustand der Anordnung ist, um im zusammengebauten Zustand keine statische Überbestimmtheit zu erreichen. Die Dicke der Adaptervorrichtung wird im montierten Zustand in Axialrichtung, d. h. in Richtung der Achse der Bremsnockenwelle, gemessen.

Gemäß einer alternativen bevorzugten Ausführungsform der Anordnung ist die Adaptervorrichtung gemäß den vorstehenden Ausführungsbeispielen ausgeführt, bei denen die Aussparung als kreisförmige Lochung der Adaptervorrichtung ausgeführt ist. Gemäß dieser Ausführungsform ist die Adaptervorrichtung etwas axial versetzt zur Steuerscheibe angeordnet und liegt seitlich an dieser an und steht im axialen Kraftfluss zwischen den Bremshebel und dem Verschleißsensor. Hierbei kann die Adaptervorrichtung durch ein Sicherungselement in Axialrichtung der Bremswelle gesichert sein.

Die Erfindung betrifft ferner ein Kraftfahrzeug, insbesondere ein Nutzfahrzeug, aufweisend eine Adaptervorrichtung und/oder eine Anordnung, wie in diesem Dokument beschrieben.

Weitere Einzelheiten und Vorteile der Erfindung werden im Folgenden unter Bezug auf die beigefügten Zeichnungen beschrieben. Es zeigen:
- Figur 1: eine perspektivische Explosionsdarstellung einer Anordnung gemäß einem ersten Ausführungsbeispiel der Erfindung;
- Figuren 2A und 2B: eine Adaptervorrichtung gemäß einem ersten Ausführungsbeispiel der Erfindung;
- Figur 3: eine Vorderansicht einer Anordnung in einem teilmontierten Zustand gemäß einem ersten Ausführungsbeispiel;
- Figur 4: eine perspektivische Explosionsdarstellung einer Anordnung gemäß einem zweiten Ausführungsbeispiel der Erfindung;
- Figur 5: eine Vorderansicht der Anordnung aus Figur 4;
- Figur 6: einen Schnitt A-A durch Figur 5;
- Figuren 7A und 7B: eine Adaptervorrichtung gemäß einem zweiten Ausführungsbeispiel der Erfindung;
- Figuren 8A und 8B: eine Adaptervorrichtung gemäß einem dritten Ausführungsbeispiel der Erfindung;
- Figur 9: eine Adaptervorrichtung gemäß einem vierten Ausführungsbeispiel der Erfindung; und
- Figuren 10A und 10B: eine Adaptervorrichtung gemäß einem fünften Ausführungsbeispiel der Erfindung.

Gleiche oder funktional äquivalente Elemente sind in allen Figuren mit denselben Bezugszeichen bezeichnet. Die Figuren betreffen Ausführungsvarianten, die bei verschleißbehafteten Trommelbremsen schwerer Nutzfahrzeuge zum Einsatz kommen. Diese können in an sich bekannter Weise als sogenannte S-Nockenbremsen in Simplex-Bauart gebaut sein.

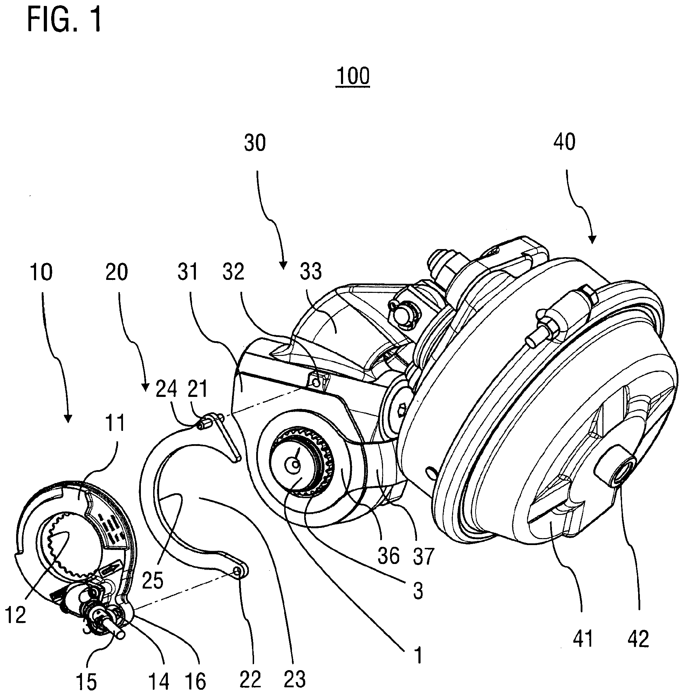

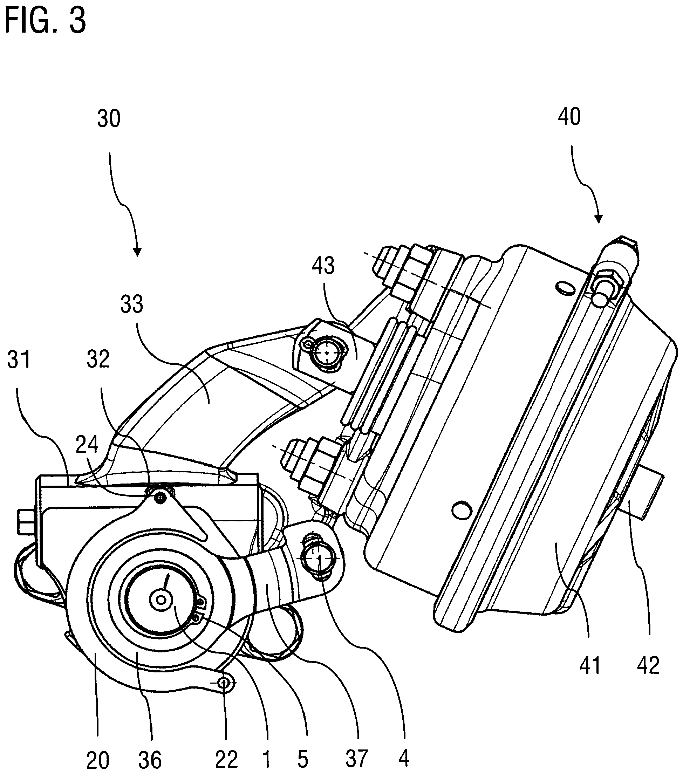

Figur 1 zeigt eine perspektivische Explosionsdarstellung einer Anordnung 100 aus einem Verschleißsensor 10, einem Bremshebel 30 mit integrierter Nachstellfunktion für eine Trommelbremse (nicht dargestellt), einem Bremszylinder 40 sowie einer Vorrichtung (Adaptervorrichtung) 20 zur Befestigung des Verschleißsensors 10 an dem Bremshebel 30. Figur 3 zeigt eine Vorderansicht der Anordnung aus Figur 1 in einem teilmontierten Zustand, d. h. noch ohne den Verschleißsensor 10.

Die Komponenten mit den Bezugszeichen 10, 30 und 40 sind an sich aus dem Stand der Technik bekannt und daher nachfolgend nur kurz beschrieben. Es wird betont, dass die nachfolgend beschriebenen Merkmale der Komponenten 10, 30 und 40 lediglich beispielhaft sind und auch andere Ausgestaltungsvarianten der Komponenten 10, 30 und 40 mit den erfindungsgemäßen Adaptervorrichtungen 20, 20a-20d verwendet werden können.

Bei einem Bremsvorgang betätigt der pneumatische Zylinder 40 über den Bremshebel 30 mit integrierter Nachstellfunktion die Bremswelle 1 mit einer S-Nocke. Die Bremswelle 1 ist als Bremsnockenwelle, insbesondere als S-Nocken-Keilwelle ausgeführt. Die auf der Bremswelle 1 sitzende S-Nocke ist in den Figuren nicht dargestellt. Sie befindet sich in den Figuren 1 und 3 in Axialrichtung der Bremswelle 1 hinter dem Bremshebel 30. Diese S-Nocke drückt infolgedessen die einseitig drehbar gelagerten Bremsbacken einer Trommelbremse gegen die Bremstrommel und erzeugt so die erwünschte Bremswirkung (jeweils nicht dargestellt). Die jeweils einen Bremsvorgang hervorrufende Verdrehung der Bremsnockenwelle 1 erfolgt somit initial durch den Bremszylinder 40, dessen Betätigungselement 41, z. B. in Form einer Kolbenstange, mit einem Hebelabschnitt 33 des Hebelarms (Gestängesteller) 30 verbunden ist. Der Bremszylinder 40 ist an einem achsfesten Lagerbock 4, z. B. am Achskörper, befestigt. Der Bremszylinder 40 ist pneumatisch betätigbar und weist hierzu an seinem Gehäuse 41 einen Pneumatikanschluss 42 auf.

Der Bremshebel 30 ist in einen oberen Hebelabschnitt 33 zum Verbinden mit dem Bremszylinder 40 und in einen unteren Gehäuseabschnitt 31 zum Anbringen an der Bremsnockenwelle 1 unterteilt. Der Gehäuseabschnitt 31 dient der Aufnahme einer an sich bekannten Nachstellvorrichtung (nicht sichtbar) in der Art eines Getriebes, insbesondere in Form eines Schneckengetriebes. Mittels der Nachstellvorrichtung ist die Bremsnockenwelle 1 gegenüber dem Bremshebel 30 um die Drehachse der Bremswelle bei Verschleiß des Bremsbelags verstellbar.

Die Nachstellvorrichtung umfasst eine Steueranordnung, die in Abhängigkeit von der Winkelstellung des Bremshebels 30 von einem festgelegten Referenzpunkt eine Steuerbewegung überträgt, wobei die Steueranordnung einen Steuerarm 37 mit einem Steuerring 36 aufweist. Der Steuerarm 36 ist unter Ausbildung des Referenzpunktes ebenfalls mit dem Lagerbock 4 verbunden. Der Steuerring 36 ist mit einer Sicherungsscheibe 5 axial gesichert. Mit zunehmendem Verschleiß stellt der Bremshebel 30 dabei die Ausgangsposition der Bremsnockenwelle 1 nach, so dass zu Beginn jedes Bremsvorgangs dasselbe Spiel zwischen Bremsbacken und Bremstrommel besteht.

Um dabei kontinuierlich den Verschleißzustand der Bremsbeläge ermitteln zu können, erfasst der Verschleißsensor 10 die bereits erfolgte Nachstellung. Aus dem Maß der bereits erfolgten Nachstellung lässt sich dann direkt der Verschleißzustand der Beläge ableiten. Der Verschleißsensor in Figur 1 umfasst dabei ein verzahntes Ringblech 12, das mit einer entsprechenden Verzahnung 3 der Bremsnockenwelle 1 kämmt. Ein darum drehbar gelagertes ringförmiges Gehäuse 11 beinhaltet dabei die Sensorik, z. B. in Form von Hall-Sensoren, die eine Verdrehung des Ringblechs 12 gegenüber dem Gehäuse 11 erfassen. Die Sensorsignale werden mittels einer Anschlussleitung 15 ausgegeben. Das Gehäuse 11 soll drehfest zum Gehäuse 31 des Bremshebels angeordnet werden.

Dies erfolgt im Stand der Technik nur mittels eines Stifts, der an einer dafür vorgesehenen Stelle am Bremshebelgehäuse 31 befestigt wird und so das Sensorgehäuse 11 gegen Verdrehung sichert. In Figur 1 ist diese Stelle am Gehäuse 31 des Bremshebels 30 mit dem Bezugszeichen 32 gekennzeichnet. Würde der Sensor 10 in herkömmlicher Weise direkt am Bremshebel 10 und nicht gemäß der Erfindung mittels der Vorrichtung 20 am Bremshebel 10 befestigt werden, so müsste der Sensor um die Bremsnockenwelle 1 derart gedreht und ausgerichtet werden, dass das Durchgangsloch 16 am Sensorgehäuse 11 direkt gegenüber der Befestigungsstelle 32 des Bremshebelgehäuses 31 läge und dort mit dem Stift bzw. Bolzen 14 befestigt werden kann. Wenn aber im Bereich der Anbindungsstelle 32 am Bremshebelgehäuse 31 der Bauraum nicht ausreicht, um z. B. die Halterung für die Anschlussleitung 15 aufzunehmen, könnte der Sensor 10 dort nicht montiert werden.

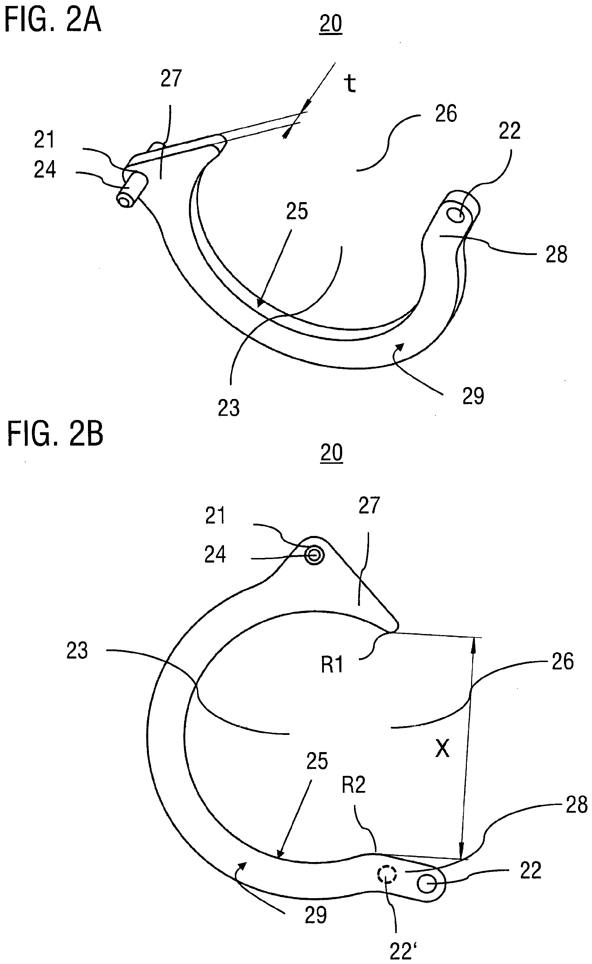

Erfindungsgemäß wird daher die Adaptervorrichtung 20 in Form eines Zwischenelements vorgeschlagen. Die Figuren 2A und 2B zeigen Detailansichten der Adaptervorrichtung. Mittels der Adaptervorrichtung 20 kann der Sensor 10 in anderen Verdrehpositionen am Bremshebelgehäuse 31 befestigt werden. Die Adaptervorrichtung 20 dient somit als Sensorhalterung, über die der Sensor 10 am Bremshebelgehäuse 31 befestigt wird.

Die Adaptervorrichtung 20 ist vorliegend als ein Flachbauteil in Form eines Blechteils ausgeführt. Das Blechteil ist im Wesentlichen hakenförmig bzw. sichelförmig und weist eine Aussparung 23 zur berührungslosen Durchführung der Bremsnockenwelle 1 auf, die eine dem Querschnitt der Bremsnockenwelle 1 entsprechende Kontur aufweist, so dass die Adaptervorrichtung im Wesentlichen koaxial zu dieser anordenbar ist, aber nicht in Kontakt mit dieser ist. Die die Aussparung 23 begrenzende Kante 25 ist teilringförmig. Die Adaptervorrichtung weist somit einseitig eine Öffnung 26 in Radialrichtung auf. Die die Aussparung 23 umgebenden Abschnitte der Adaptervorrichtung 20 bilden in Axialrichtung auf gegenüberliegenden Seiten der Adaptervorrichtung 20 zwei plane Anlageflächen 29 aus, von denen im montierten Zustand der Anordnung eine am Bremshebelgehäuse 31 und die andere am Sensorgehäuse 11 anliegt.

An einem ersten Endbereich 27 weist die Adaptervorrichtung 20 eine angeformte Nase mit einem Durchgangsloch 21 auf. Das Durchgangsloch dient der Aufnahme eines Befestigungsbolzens 24, über den die Adaptervorrichtung 20 an der vorbestimmten Stelle 32 am Bremshebelgehäuse 31 befestigt wird.

An einem zweiten Endbereich 28, der gegenüberliegend zum ersten Endbereich angeordnet ist, weist die Adaptervorrichtung 20 einen leicht nach außen wegknickenden Steg auf, der ebenfalls ein Durchgangsloch 22 aufweist. An dieser Stelle wird der Befestigungssensor mittels eines Bolzens 14, der in das Durchgangsloch 16 im Sensorgehäuse 11 eingreift, befestigt. Mittels der Adaptervorrichtung 20 kann der Sensor 10 somit fast um 180 Grad verdreht zur ursprünglich vorgesehenen Montageposition eingebaut werden. Wie in Figur 2B dargestellt, kann alternativ noch ein zweites Durchgangsloch 22' im Endbereich 28 vorgesehen sein, um eine alternative Montageposition für das Sensorgehäuse 11 bereitzustellen.

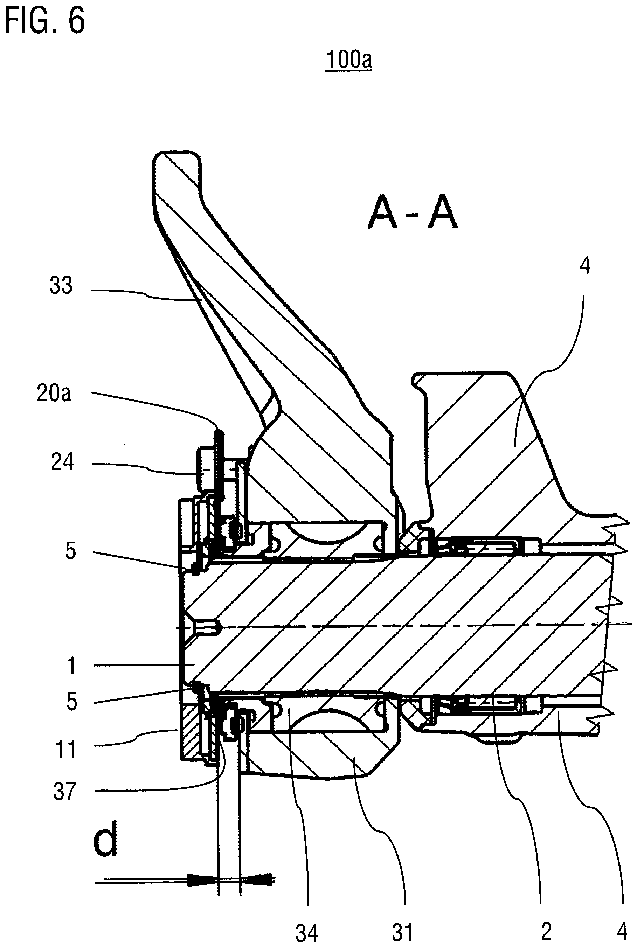

Figur 3 zeigt eine Vorderansicht der Anordnung 100 in einem teilmontierten Zustand, d. h. nach Befestigung der Adaptervorrichtung 20 am Bremshebelgehäuse 31 und vor dem Anbringen des Sensors 10. Die Adaptervorrichtung 20 ist so am Bremshebelgehäuse 31 angebracht, dass sie nicht im axialen Kraftfluss zwischen Hebelarm 30 und Verschleißsensor 10 steht, sondern in einem Kraftnebenfluss, der lediglich den Verschleißsensor 10 in seinem Drehfreiheitsgrad einschränkt. Hierbei wird ausgenutzt, dass sich zwischen Sensorgehäuse 10 und dem Gehäuse 31 des Bremshebels 30 ein Spalt, dessen Dicke d in Figur 6 dargestellt ist, bildet. Gemäß der in den Figuren 1 und 3 gezeigten Varianten wird dieser Bauraum zur Anordnung der Adaptervorrichtung 20 genutzt, wodurch in Axialrichtung durch die Adaptervorrichtung 20 kein zusätzlicher Bauraum benötigt wird. Ferner wird die Adaptervorrichtung 20 hierdurch axial gesichert.

Hierzu umgreift die Kante 25, die die Aussparung 23 begrenzt bzw. deren Kontur festgelegt, den Steuerring 36 und liegt somit auf diesem auf. Folglich ist die in Figur 2A dargestellte Dicke t der Adaptervorrichtung 20 kleiner gleich als der in Figur 6 dargestellte Abstand d zwischen den einander zugewandten Gehäuseabschnitten des Verschleißsensors 10 und des Bremshebels 30, um im zusammengebauten Zustand keine statische Überbestimmtheit zu erreichen. Die in Figur 2B dargestellte Größe x der radialen Öffnung 26 der Aussparung 23 ist kleiner als ein Außendurchmesser D des Steuerrings 36, um ein Herunterrutschen des Adapterrings von der Steuerscheibe 36 während des Montagevorgangs zu vermeiden. Die Größe x der radialen Öffnung 26 entspricht dabei dem Abstand der einander gegenüberliegenden Randpunkte R1, R2, die die Randpunkte der Öffnung 26 festlegen.

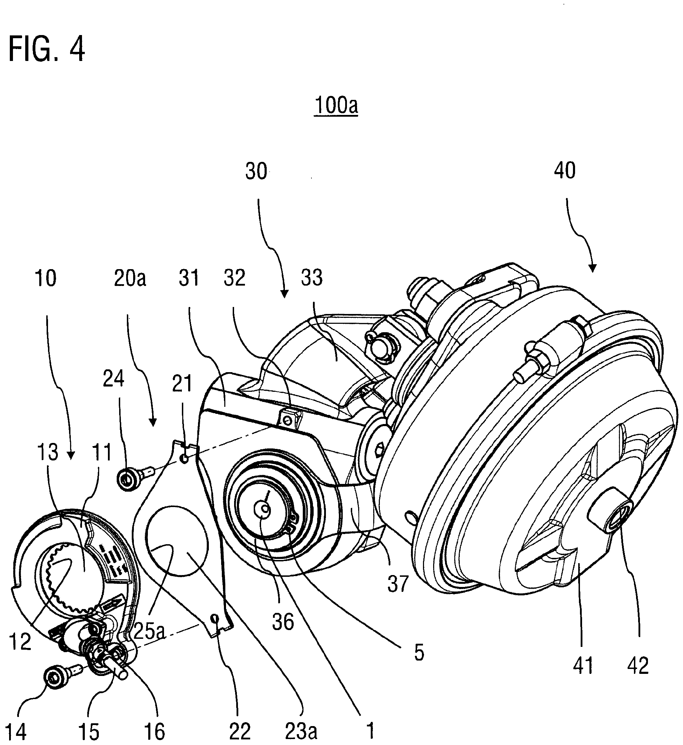

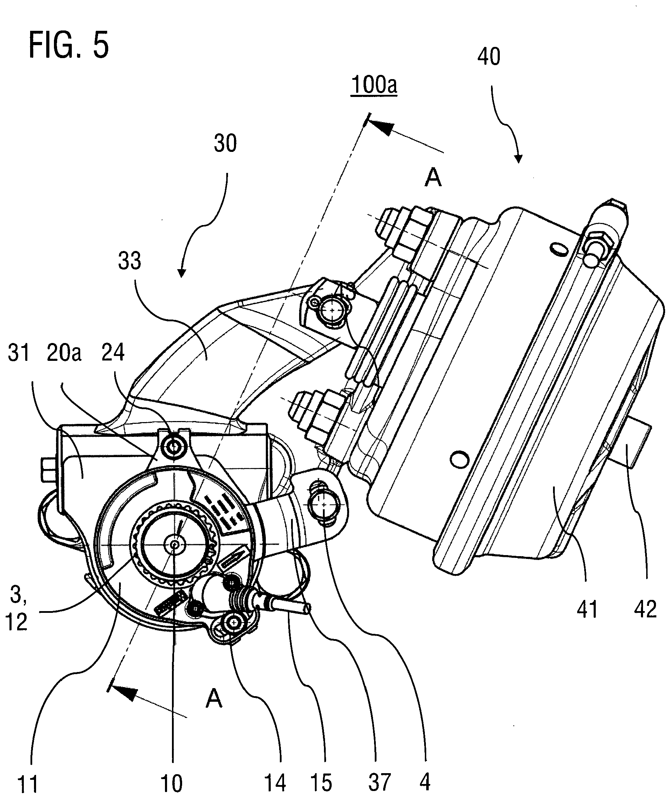

Figur 4 zeigt eine perspektivische Explosionsdarstellung einer Anordnung gemäß einem zweiten Ausführungsbeispiel der Erfindung und Figur 5 eine Vorderansicht der Anordnung aus Figur 4. Hierbei entsprechen Komponenten mit gleichen Bezugszeichen den Komponenten der Figur 1 und werden nicht gesondert beschrieben.

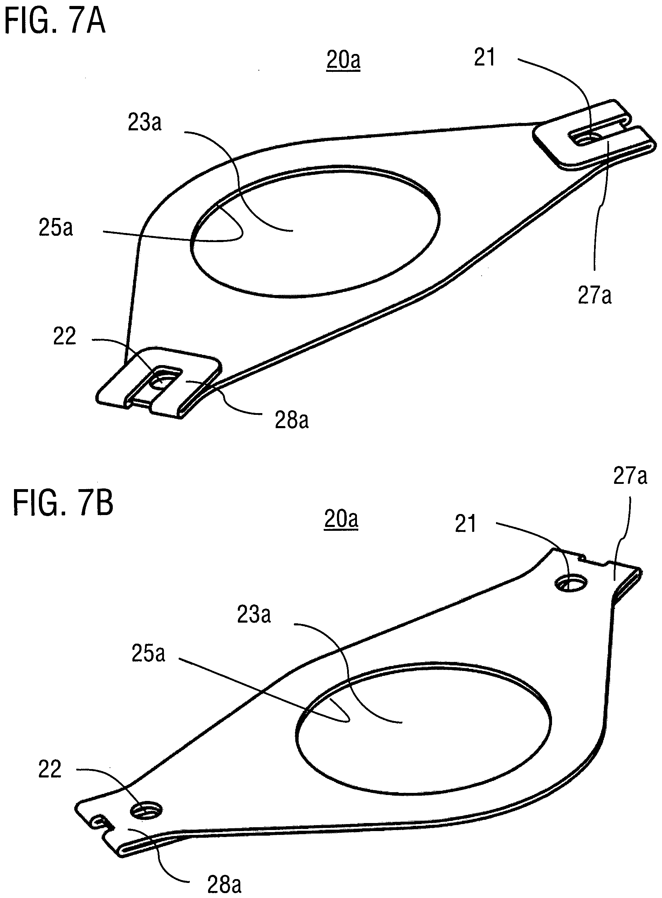

Eine Besonderheit dieser Ausführungsvariante liegt darin, dass die Adaptervorrichtung 20a nicht hakenförmig ausgeführt ist, sondern dass die Aussparung 23 als kreisförmige Lochung der Vorrichtung 20a ausgeführt ist. Ein Beispiel ist in den Figuren 7A und 7B dargestellt, die die Vordersicht und die Rückansicht der Adaptervorrichtung 20a zeigen.

Eine weitere Besonderheit dieser Ausführungsvariante liegt darin, dass die Adaptervorrichtung 20a in den axialen Kraftfluss zwischen dem Gehäuseabschnitt 31 des Bremshebels 30 und dem Verschleißsensor 10 eingebracht wird, d. h., die Adaptervorrichtung 20a wird in Axialrichtung versetzt zu der Steuerscheibe 36 angeordnet und durch eine Sicherungsscheibe 5 in Axialrichtung der Bremsnockenwelle 1 gesichert. Aus Bauraumgründen sollte daher die Dicke bzw. die Wandstärke der Adaptervorrichtung 20a möglichst klein sein. Um die Adaptervorrichtung an den Anbindungsstellen, an denen die Adaptervorrichtung 20a am Bremshebelgehäuse 30a bzw. am Sensorgehäuse 11 befestigt wird, zu verstärken, kann dort jeweils eine Lochverstärkung vorgesehen sein. Dies ist in der Schnittdarstellung der Figur 6 erkennbar, die zeigt, dass die Wandstärke der Adaptervorrichtung 20a an der Anbindungsstelle am Bremshebelgehäuse 31, an der die Befestigung mittels des Bolzens 24 erfolgt, dicker ist als im mittleren Bereich in der Nähe zur Bremsnockenwelle 1. In der Figur 6 ist ferner das Lager 2 der Bremsnockenwelle 1 sowie ein Teil 34 des Schneckengetriebes zum Nachstellen des Bremshebels gezeigt.

Wie in den Figuren 7A bzw. 7B gezeigt, kann die Lochverstärkung an den Anbindungsstellen 21, 22 in Form einer Faltung 27a, 27b zur Ausbildung einer doppelwandigen Anbindungsstelle vorgesehen sein.

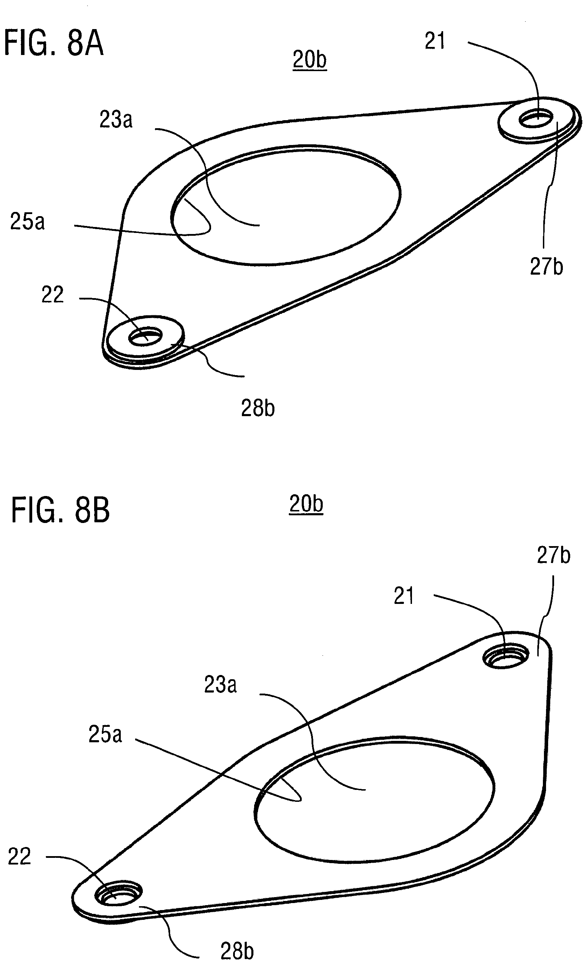

Eine weitere Variante 20b der Adaptervorrichtung ist in den Figuren 8A und 8B gezeigt, wobei die Lochverstärkung in Form einer die Durchgangslöcher 21, 22 jeweils umgebenden Lochscheibe 27b, 28b vorgesehen ist.

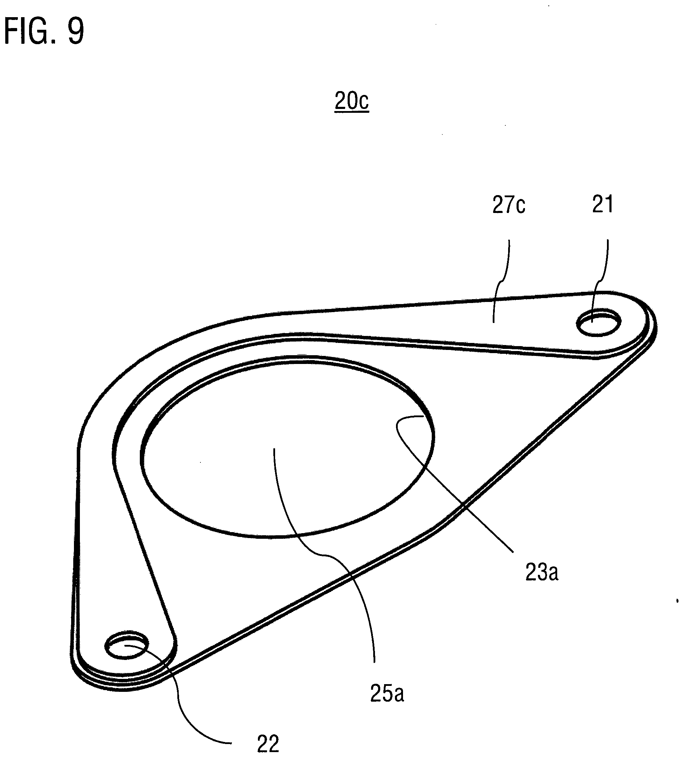

Eine weitere Variante 20c der Adaptervorrichtung 20c ist in Figur 9 gezeigt, wobei die Lochverstärkung in Form einer länglichen, vorzugsweise bügelförmigen Verstärkungsplatte 27c vorgesehen ist, die sich von der ersten bis zur zweiten Anbindungsstelle erstreckt und an ihren beiden Endbereichen jeweils ein Durchgangsloch aufweist, das fluchtend zu dem korrespondierenden Durchgangsloch 21, 22 der Adaptervorrichtung 20c ist.

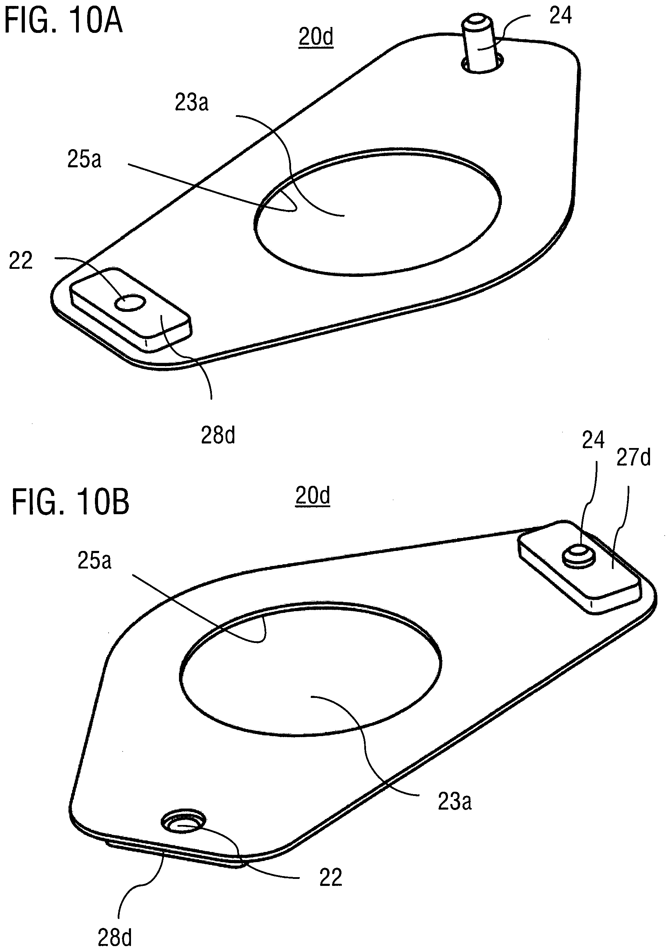

Eine weitere Variante 20d der Adaptervorrichtung ist in den Figuren 10A und 10B gezeigt, wobei die Lochverstärkung in Form eines die Lochung 21, 22 umgebenden Lochplättchens 27d vorgesehen ist.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Bremsnockenwelle
- 2: Lagerung Bremsnockenwelle
- 3: Verzahnung
- 4: Lagerbock
- 5: Sicherungsring
- 10: Verschleißsensor
- 11: Verschleißsensorgehäuse
- 12: Keilwellenverzahnung
- 14: Bolzen
- 15: Anschlussleitung
- 16: Durchgangsloch
- 20, 20a, 20b, 20c, 20d: Adapterelement
- 21, 22, 22': Durchgangsloch
- 23, 23a: Aussparung
- 24: Bolzen
- 25, 25a: innere kreisbogenkante
- R1, R2: Randpunkt der Kreisbogenkante
- x: Größe der Öffnung, Abstand R1-R2
- 26: (Radiale) Öffnung
- 27, 28, 27a, 28a, 27b, 28b: Endbereich
- 29: Anlagefläche
- 30: Bremshebel (Gestängesteller)
- 31: Gehäuseabschnitt
- 32: Befestigungsstelle
- 33: Hebelabschnitt
- 34: Schneckengetriebe
- 36: Steuerring
- 37: Steuerarm
- D: Durchmesser Steuerarm
- 40: Bremszylinder
- 41: Bremszylindergehäuse
- 42: Pneumatikanschluss
- 43: Betätigungselement
- 100, 101: Anordnung

## Patentansprüche

1. Adaptervorrichtung (20; 20a; 20b; 20c; 20d) zur Befestigung eines Verschleißsensors (10) an einem Bremshebel (30) mit integrierter Nachstellfunktion einer Fahrzeugbremse, wobei die Adaptervorrichtung als Zwischenelement zwischen dem Bremshebel und dem Verschleißsensor anbringbar ist und **gekennzeichnet durch** eine Aussparung (23; 23a) zur berührungslosen Durchführung einer Bremswelle (1);
eine erste Befestigungsstelle zur Befestigung einer ersten Seite der Adaptervorrichtung an einem Gehäuseabschnitt (31) des Bremshebels (30);
mindestens eine zweite Befestigungsstelle zur Befestigung eines Verschleißsensors (10) an einer zweiten, zur ersten Seite gegenüberliegenden Seite der Adaptervorrichtung, wobei die zweite Befestigungsstelle beabstandet zur ersten Befestigungsstelle angeordnet ist.

2. Adaptervorrichtung (20; 20a; 20b; 20c; 20d) nach Anspruch 1, **dadurch gekennzeichnet, dass** die erste Befestigungsstelle und die zweite Befestigungsstelle jeweils ein Durchgangsloch (21, 22, 22') aufweisen.

3. Adaptervorrichtung (20; 20a; 20b; 20c; 20d) nach Anspruch 1 oder 2, **dadurch gekennzeichnet,**
(a) **dass** die Adaptervorrichtung als Flachbauteil, insbesondere als Blechteil, ausgeführt ist; und/oder
(b) **dass** die die Aussparung (23; 23a) umgebenden Abschnitte der Adaptervorrichtung zwei plane Anlageflächen (29) auf gegenüberliegenden Seiten der Adaptervorrichtung ausbilden.

4. Adaptervorrichtung (20) nach einem der vorhergehenden Ansprüche, **dadurch gekennzeichnet, dass** die Adaptervorrichtung und/oder zumindest der die Aussparung (23) begrenzende Teil der Adaptervorrichtung (20) hakenförmig, sichelförmig oder teilringförmig ist.

5. Adaptervorrichtung (20a; 20b; 20c; 20d) nach einem der Ansprüche 1 bis 3, **dadurch gekennzeichnet, dass** die Aussparung als kreisförmige Lochung (23a) der Adaptervorrichtung ausgeführt ist.

6. Adaptervorrichtung nach Anspruch 5, abhängig von Anspruch 2, **dadurch gekennzeichnet, dass** mindestens eine der Anbindungsstellen eine Lochverstärkung aufweist.

7. Adaptervorrichtung nach Anspruch 6, **dadurch gekennzeichnet, dass** die Lochverstärkung in Form
(a) einer Faltung (27a, 27b) zur Ausbildung einer mindestens doppelwandigen Anbindungsstelle vorgesehen ist; und/oder
(b) einer die Lochung umgebenden Lochscheibe (27b, 28b) oder eines Lochplättchens (27d) vorgesehen ist; und/oder
(c) einer länglichen, vorzugsweise bügelförmigen Verstärkungsplatte (27c) vorgesehen ist, die sich von der ersten bis zur zweiten Anbindungsstelle erstreckt und an ihren beiden Endbereichen jeweils ein Durchgangsloch aufweist, das fluchtend zu dem korrespondierenden Durchgangsloch (21, 22) der Adaptervorrichtung ist.

8. Anordnung (100; 101) aus einer Adaptervorrichtung (20; 20a; 20b; 20c) gemäß einer der vorhergehenden Ansprüche, einem Verschleißsensor (10) und einem Bremshebel (30) mit integrierter Nachstellfunktion einer Trommelbremse.

9. Anordnung nach Anspruch 8, **dadurch gekennzeichnet,**
(a) **dass** der Bremshebel einen Hebelabschnitt (33) zum Verbinden mit einem Bremszylinder (40) und einen Gehäuseabschnitt (31) zum Anbringen an einer Bremswelle (1), insbesondere einer S-Nocken-Keilwelle, aufweist, wobei in dem Gehäuseabschnitt (31) eine Nachstellvorrichtung in der Art eines Getriebes, insbesondere in Form eines Schneckengetriebes, aufgenommen ist, mit der die Bremswelle (1) gegenüber dem Bremshebel (30) um die Drehachse der Bremswelle bei Verschleiß des Bremsbelags verstellbar ist; und
(b) **dass** die Adaptervorrichtung (20; 20a; 20b; 20c; 20d) zwischen dem Verschleißsensor (10) und dem Gehäuseabschnitt (31) des Bremshebels (30) angeordnet und an der ersten Befestigungsstelle an dem Gehäuseabschnitt (31) des Bremshebels (30) und an der zweiten Befestigungsstelle an einem Gehäuse (11) des Verschleißsensors (10) befestigt ist und dadurch das Gehäuse (11) des Verschleißsensors drehfest zum Gehäuseabschnitt (31) des Bremshebels (30) festlegt.

10. Anordnung (100) nach Anspruch 9, **dadurch gekennzeichnet,**
(a) **dass** die Adaptervorrichtung (20) gemäß Anspruch 4 ausgeführt ist;
(b) **dass** die Nachstellvorrichtung eine Steueranordnung umfasst, die in Abhängigkeit von der Winkelstellung des Bremshebels (30) eine Steuerbewegung überträgt, wobei die Steueranordnung einen Steuerarm (37) mit einem Steuerring (36) aufweist, wobei der Steuerarm (37) mit einem Lagerbock verbunden ist; und
(c) **dass** die Adaptervorrichtung so zwischen Verschleißsensor und dem Gehäuseabschnitt (31) des Bremshebels (30) angeordnet ist, dass eine die Aussparung (23) der Adaptervorrichtung begrenzende Kante (25) den Steuerring (36) umgreift.

11. Anordnung (100) nach Anspruch 10, **dadurch gekennzeichnet, dass** eine Größe (x) einer Öffnung, die durch einen Abstand der Endbereiche (R1, R2) der die Aussparung (23) begrenzenden teilringförmigen Kante (25) gebildet wird, kleiner als ein Außendurchmesser (D) des Steuerrings (36) ist.

12. Anordnung (100) nach Anspruch 10 oder 11, **dadurch gekennzeichnet, dass** eine Dicke (t) der Adaptervorrichtung (20) kleiner als ein Abstand (d) zwischen den einander zugewandten Gehäuseabschnitten des Verschleißsensors (10) und des Bremshebels (30) ist.

13. Anordnung (101) nach Anspruch 8 oder 9, **dadurch gekennzeichnet,**
(a) **dass** die Adaptervorrichtung (20a; 20b; 20c) gemäß einem der Ansprüche 5 bis 7 ausgeführt ist; und
(b) **dass** die Adaptervorrichtung (20a; 20b; 20c) im axialen Kraftfluss zwischen dem Gehäuseabschnitt (31) des Bremshebels (30) und dem Verschleißsensor (10) angeordnet ist und durch ein Sicherungselement (5) in Axialrichtung der Bremswelle (1) gesichert ist.

14. Anordnung nach einem der Ansprüche 8 bis 13, **dadurch gekennzeichnet, dass** die Adaptervorrichtung an den Anbindungsstellen mittels eines Bolzens (24), der als Schraube oder eingepresster oder eingeschweißter Stift ausgeführt ist, an dem Gehäuse des Hebelarms (10) bzw. am Gehäuse des Verschleißsensors (10) befestigt ist.

15. Kraftfahrzeug, insbesondere Nutzfahrzeug, aufweisend eine Adaptervorrichtung (20; 20a; 20b; 20c) nach einem der Ansprüche 1 bis 7 und/oder einer Anordnung (100; 101) nach einem der Ansprüche 8 bis 14.

## Claims

1. Adapter device (20; 20a; 20b; 20c; 20d) for fastening a wear sensor (10) to a brake lever (30) having an integrated adjustment function of a vehicle brake, wherein the adapter device can be attached as an intermediate element between the brake lever and the wear sensor and is **characterized by**:
a recess (23; 23a) for the contactless passage of a brake shaft (1);
a first fastening point for fastening a first side of the adapter device to a housing portion (31) of the brake lever (30);
at least one second fastening point for fastening a wear sensor (10) to a second side of the adapter device opposite the first side, wherein the second fastening point is arranged spaced apart from the first fastening point.

2. Adapter device (20; 20a; 20b; 20c; 20d) according to Claim 1, **characterized in that** the first fastening point and the second fastening point each have a through-hole (21, 22, 22').

3. Adapter device (20; 20a; 20b; 20c; 20d) according to Claim 1 or 2, **characterized**
(a) **in that** the adapter device is designed as a flat component, in particular as a sheet-metal part; and/or
(b) **in that** those portions of the adapter device that surround the recess (23; 23a) form two flat contact surfaces (29) on opposite sides of the adapter device.

4. Adapter device (20) according to one of the preceding claims, **characterized in that** the adapter device and/or at least that part of the adapter device (20) which bounds the recess (23) is hook-shaped, sickle-shaped or partially annular.

5. Adapter device (20a; 20b; 20c; 20d) according to one of Claims 1 to 3, **characterized in that** the recess is designed as a circular perforation (23a) in the adapter device.

6. Adapter device according to Claim 5, depending on Claim 2, **characterized in that** at least one of the connecting points has a hole reinforcement.

7. Adapter device according to Claim 6, **characterized in that** the hole reinforcement
(a) is provided in the form of a fold (27a, 27b) for forming an at least double-walled connecting point; and/or
(b) is provided in the form of a perforated disc (27b, 28b) surrounding the perforation, or in the form of a perforated plate (27d); and/or
(c) is provided in the form of an elongate, preferably bow-shaped reinforcing plate (27c) which extends from the first as far as the second connecting point and, at its two end regions, has a respective through-hole which is aligned with the corresponding through-hole (21, 22) in the adapter device.

8. Arrangement (100; 101) consisting of an adapter device (20; 20a; 20b; 20c) according to one of the preceding claims, and of a wear sensor (10) and a brake lever (30) having an integrated adjustment function of a drum brake.

9. Arrangement according to Claim 8, **characterized**
(a) **in that** the brake lever has a lever portion (33) for connecting to a brake cylinder (40) and a housing portion (31) for attaching to a brake shaft (1), in particular to an S-cam spline shaft, wherein an adjustment device in the manner of a gearing, in particular in the form of a worm gearing, is accommodated in the housing portion (31), with which adjustment device the brake shaft (1) is adjustable in relation to the brake lever (30) about the axis of rotation of the brake shaft in the event of wear of the brake lining; and
(b) **in that** the adapter device (20; 20a; 20b; 20c; 20d) is arranged between the wear sensor (10) and the housing portion (31) of the brake lever (30) and is fastened at the first fastening point to the housing portion (31) of the brake lever (30) and at the second fastening point to a housing (11) of the wear sensor (10) and thereby secures the housing (11) of the wear sensor non-rotatably with respect to the housing portion (31) of the brake lever (30).

10. Arrangement (100) according to Claim 9, **characterized**
(a) **in that** the adapter device (20) is designed according to Claim 4;
(b) **in that** the adjustment device comprises a control arrangement which transmits a control movement depending on the angular position of the brake lever (30), wherein the control arrangement has a control arm (37) with a control ring (36), wherein the control arm (37) is connected to a bearing bracket; and
(c) **in that** the adapter device is arranged between wear sensor and the housing portion (31) of the brake lever (30) in such a manner that an edge (25) bounding the recess (23) of the adapter device engages around the control ring (36).

11. Arrangement (100) according to Claim 10, **characterized in that** a size (x) of an opening which is formed by a distance between the end regions (R1, R2) of the partially annular edge (25) bounding the recess (23) is smaller than an outside diameter (D) of the control ring (36).

12. Arrangement (100) according to Claim 10 or 11, **characterized in that** a thickness (t) of the adapter device (20) is smaller than a distance (d) between the mutually facing housing portions of the wear sensor (10) and of the brake lever (30).

13. Arrangement (101) according to Claim 8 or 9, **characterized**
(a) **in that** the adapter device (20a; 20b; 20c) is designed according to one of Claims 5 to 7; and
(b) **in that** the adapter device (20a; 20b; 20c) is arranged in the axial force flux between the housing portion (31) of the brake lever (30) and the wear sensor (10) and is secured in the axial direction of the brake shaft (1) by a securing element (5).

14. Arrangement according to one of Claims 8 to 13, **characterized in that** the adapter device is fastened at the connecting points to the housing of the lever arm (10) or to the housing of the wear sensor (10) by means of a bolt (24) which is designed as a screw or as a pressed-in or welded-in pin.

15. Motor vehicle, in particular commercial vehicle, having an adapter device (20; 20a; 20b; 20c) according to one of Claims 1 to 7 and/or an arrangement (100; 101) according to one of Claims 8 to 14.

## Revendications

1. Dispositif adaptateur (20 ; 20a ; 20b ; 20c ; 20d) pour la fixation d'un capteur d'usure (10) à un levier de frein (30) ayant une fonction de réglage intégrée d'un frein de véhicule, le dispositif adaptateur pouvant être monté en tant qu'élément intermédiaire entre le levier de frein et le capteur d'usure et étant **caractérisé par** :
un évidement (23 ; 23a) pour le passage sans contact d'un arbre de frein (1) ;
un premier point de fixation pour la fixation d'un premier côté du dispositif adaptateur à une portion de boîtier (31) du levier de frein (30) ;
au moins un deuxième point de fixation pour la fixation d'un capteur d'usure (10) à un deuxième côté opposé au premier côté du dispositif adaptateur, le deuxième point de fixation étant espacé du premier point de fixation.

2. Dispositif adaptateur (20 ; 20a ; 20b ; 20c ; 20d) selon la revendication 1, **caractérisé en ce que** le premier point de fixation et le deuxième point de fixation présentent chacun un trou de passage (21, 22, 22').

3. Dispositif adaptateur (20 ; 20a ; 20b ; 20c ; 20d) selon la revendication 1 ou 2, **caractérisé**
(a) **en ce que** le dispositif adaptateur est réalisé sous forme de composant plat, en particulier sous forme de pièce en tôle ; et/ou
(b) **en ce que** les parties du dispositif adaptateur entourant l'évidement (23 ; 23a) constituent deux surfaces d'appui planes (29) sur des côtés opposés du dispositif adaptateur.

4. Dispositif adaptateur (20) selon l'une quelconque des revendications précédentes, **caractérisé en ce que** le dispositif adaptateur et/ou au moins la partie du dispositif adaptateur (20) limitant l'évidement (23) est réalisé(e) en forme de crochet, en forme de croissant ou en forme de bague partielle.

5. Dispositif adaptateur (20a ; 20b ; 20c ; 20d) selon l'une quelconque des revendications 1 à 3, **caractérisé en ce que** l'évidement est réalisé sous forme de perforation circulaire (23a) du dispositif adaptateur.

6. Dispositif adaptateur selon la revendication 5, lorsqu'elle dépend de la revendication 2, **caractérisé en ce qu'**au moins l'un des points de liaison présente un renforcement de trou.

7. Dispositif adaptateur selon la revendication 6, **caractérisé en ce que** le renforcement de trou est prévu sous la forme
(a) d'un pli (27a, 27b) pour réaliser un point de liaison à au moins deux parois ; et/ou
(b) d'un disque perforé (27b, 28b) entourant la perforation ou d'une plaque perforée (27d) ; et/ou
(c) d'une plaque de renforcement allongée (27c), de préférence en forme d'étrier qui s'étend depuis le premier jusqu'au deuxième point de liaison et qui présente au niveau de ses deux régions d'extrémité à chaque fois un trou traversant qui est aligné avec le trou traversant correspondant (21, 22) du dispositif adaptateur.

8. Agencement (100 ; 101) constitué d'un dispositif adaptateur (20 ; 20a ; 20b ; 20c) selon l'une quelconque des revendications précédentes, d'un capteur d'usure (10) et d'un levier de frein (30) avec une fonction de réglage intégrée d'un frein à tambour.

9. Agencement selon la revendication 8, **caractérisé**
(a) **en ce que** le levier de frein présente une portion de levier (33) pour la connexion à un cylindre de frein (40) et une portion de boîtier (31) pour le montage sur un arbre de frein (1), en particulier un arbre cannelé à came en S, un dispositif de réglage étant prévu dans la portion de boîtier (31) à la manière d'une transmission, en particulier sous la forme d'une transmission à vis sans fin, avec laquelle l'arbre de frein (1) peut être réglé par rapport au levier de frein (30) autour de l'axe de rotation de l'arbre de frein en cas d'usure de la garniture de frein ; et
(b) **en ce que** le dispositif adaptateur (20 ; 20a ; 20b ; 20c ; 20d) est disposé entre le capteur d'usure (10) et la portion de boîtier (31) du levier de frein (30) et est fixé au niveau du premier point de fixation à la portion de boîtier (31) du levier de frein (30), et au niveau du deuxième point de fixation à un boîtier (11) du capteur d'usure (10), et fixe ainsi le boîtier (11) du capteur d'usure de manière solidaire en rotation par rapport à la portion de boîtier (31) du levier de frein (30).

10. Agencement (100) selon la revendication 9, **caractérisé**
(a) **en ce que** le dispositif adaptateur (20) est réalisé selon la revendication 4 ;
(b) **en ce que** le dispositif de réglage comprend un agencement de commande qui transfère un mouvement de commande en fonction de la position angulaire du levier de frein (30), l'agencement de commande présentant un bras de commande (37) avec une bague de commande (36), le bras de commande (37) étant connecté à un coussinet ; et
(c) **en ce que** le dispositif adaptateur est disposé entre le capteur d'usure et la portion de boîtier (31) du levier de frein (30) de telle sorte qu'une arête (25) limitant l'évidement (23) du dispositif adaptateur vienne en prise autour de la bague de commande (36).

11. Agencement (100) selon la revendication 10, **caractérisé en ce que** la taille (X) d'une ouverture qui est formée par un espacement des régions d'extrémité (R1, R2) de l'arête (25) en forme de bague partielle limitant l'évidement (23) est inférieure à un diamètre extérieur (D) de la bague de commande (36).

12. Agencement (100) selon la revendication 10 ou 11, **caractérisé en ce qu'**une épaisseur (t) du dispositif adaptateur (20) est inférieure à un espacement (d) entre les portions de boîtier tournées l'une vers l'autre du capteur d'usure (10) et du levier de frein (30).

13. Agencement (101) selon la revendication 8 ou 9, **caractérisé**
(a) **en ce que** le dispositif adaptateur (20a ; 20b ; 20c) est réalisé selon l'une quelconque des revendications 5 à 7 ; et
(b) **en ce que** le dispositif adaptateur (20a ; 20b ; 20c) est disposé dans le flux de forces axiales entre la portion de boîtier (31) du levier de frein (30) et le capteur d'usure (10) et est fixé dans la direction axiale de l'arbre de frein (1) par un élément de fixation (5).

14. Agencement selon l'une quelconque des revendications 8 à 13, **caractérisé en ce que** le dispositif adaptateur est fixé au niveau des points de liaison au moyen d'un boulon (24), qui est réalisé sous forme de vis ou de goupille enfoncée par pressage ou par soudage, au boîtier du bras de levier (10) ou au boîtier du capteur d'usure (10).

15. Véhicule automobile, en particulier véhicule utilitaire présentant un dispositif adaptateur (20 ; 20a ; 20b ; 20c) selon l'une quelconque des revendications 1 à 7 et/ou un agencement (100 ; 101) selon l'une quelconque des revendications 8 à 14) .
